# EUROPEAN PATENT APPLICATION

(11) **EP 1 553 567 A2**
(43) Date of publication of application: **13.07.2005**
(21) Application number: 04030054.3
(22) Date of filing: 17.12.2004
(51) Int. Cl.: G11B 7/005

(54) **Wobble-signal extracting circuit and optical disk drive**

(30) Priority: 06.01.2004 JP 2004001047
(71) Applicant: MATSUSHITA ELECTRIC INDUSTRIAL CO., LTD., Kadoma-shi, Osaka 571-8501 (JP)
(72) Inventor: Morikawa, Hiroyasu, Ibaraki-shi Osaka 567-0042 (JP); Ogata, Shigeyuki, Nagaokakyo-shi Kyoto 617-0832 (JP)
(74) Representative: Grünecker, Kinkeldey, Stockmair & Schwanhäusser Anwaltssozietät

(57) **Abstract**

A phase comparator performs phase comparison and amplitude detection on an RF signal component remaining in an output signal of a subtracter and a signal obtained by binarizing, with reference to a reference voltage, an RF signal component included in the output signal of a first VGA. A charge pump feedback controls a gain of a second VGA on the basis of the results of the phase comparison and the amplitude detection obtained by the phase comparator so as to eliminate a difference between the RF signal component remaining in the output signal of the subtracter and the RF signal component included in the output signal of the first VGA.

## Description

### CROSS-REFERENCE TO RELATED APLICATIONS

This application claims priority under 35 U.S.C. §119 on Patent Application No. 2004-001047 filed in Japan on January 6, 2004 , the entire contents of which are hereby incorporated by reference.

### BACKGROUND OF THE INVENTION

The present invention relates to information recording/reproducing technique for an optical disk which information can be optically recorded in or reproduced from, and more particularly, it relates to a circuit technology for accurately extracting a wobble signal derived from a wobble from a signal reproduced from an optical disk in an optical disk drive in which the rotation of the optical disk is controlled and position information of a track is acquired on the basis of the wobble formed on the surface of the optical disk.

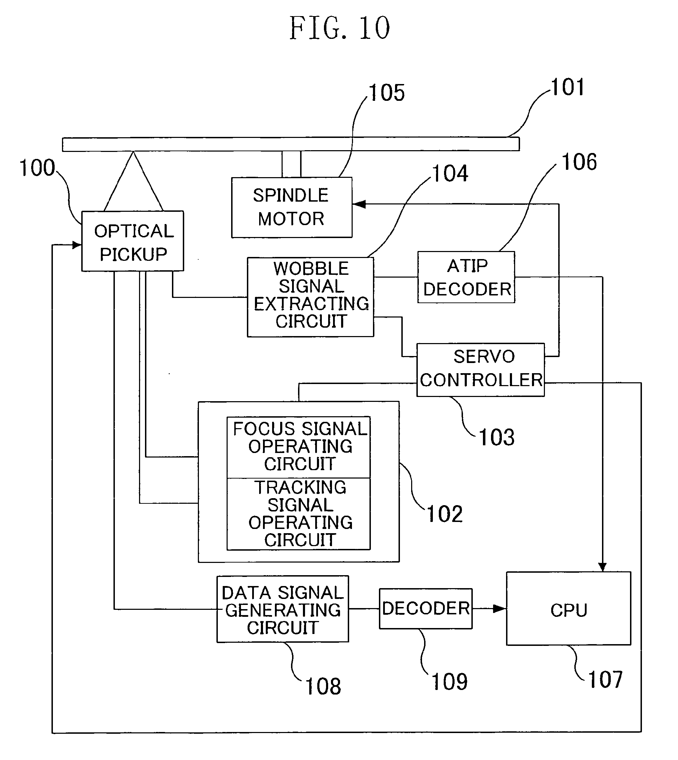

In a conventional optical disk drive, data is recorded in or reproduced from an optical disk through tracking performed on the basis of a guide groove, namely, a wobble previously formed in a zigzag manner along the radial direction on the surface of the optical disk. FIG. 10 shows the architecture of a CD-R recording/reproducing apparatus as an example of the conventional optical disk drive. An optical pickup 100 irradiates an optical disk 101 rotated at a given speed with a laser beam, detects reflected light with a divided photodetector and converts the detected light into an electric signal. A servo signal generating circuit 102 generates a focus or tracking error signal from the thus obtained signal and performs focus or tracking servo for the optical pickup 100 through a servo controller 103.

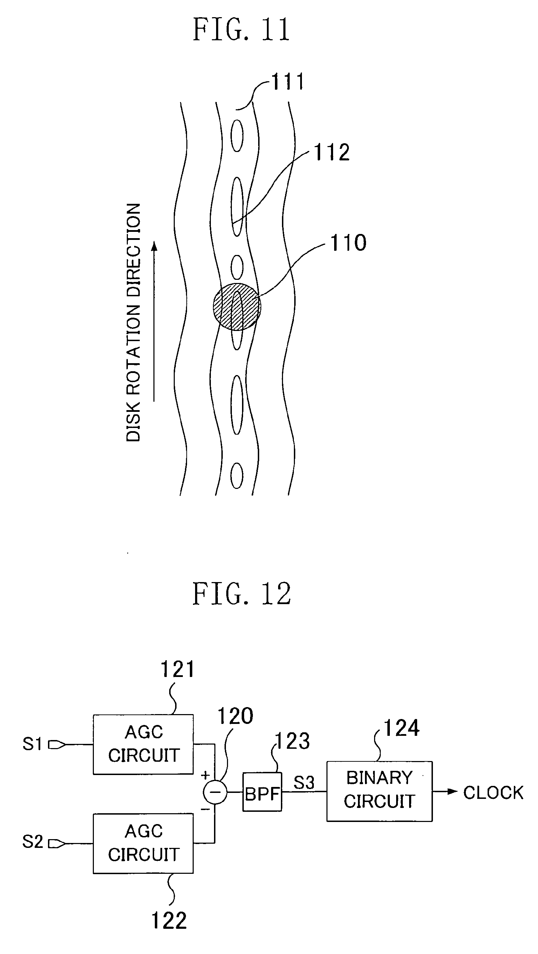

FIG. 11 is an enlarged view of the surface of the optical disk 101 placed in a servo controlled state. In the servo controlled state, the laser beam emitted from the optical pickup 100 is collected like a laser spot 110 and controlled in the tracking to always follow a guide groove 111. Also, in the case where information is recorded in the optical disk 101, there are pits 112 in the guide groove 111, and the optical pickup 100 generates a signal on the basis of reflected light whose intensity is changed by the presence of the pits 112.

Referring to FIG. 10 again, a wobble signal extracting circuit 104 extracts a wobble signal derived from the guide groove **111** of **FIG. 11,** namely, the wobble. The servo controller 103 controls, for spindle servo, the rotation speed of a spindle motor 105 to make the wobble signal have a desired frequency. Furthermore, ATIP (Absolute Time In Pre-groove) corresponding to address information of the optical disk 101 is inserted into the wobble signal. An ATIP decoder 106 demodulates the ATIP from the wobble signal and sends the position information of the optical pickup 100 on the optical disk 101 to a CPU 107. On the other hand, a data signal generating circuit 108 generates a data signal on the basis of the signal generated by the optical pickup 100. A decoder 109 decodes the data signal generated by the data signal generating circuit 108 so as to demodulate a signal recorded in the optical disk 101.

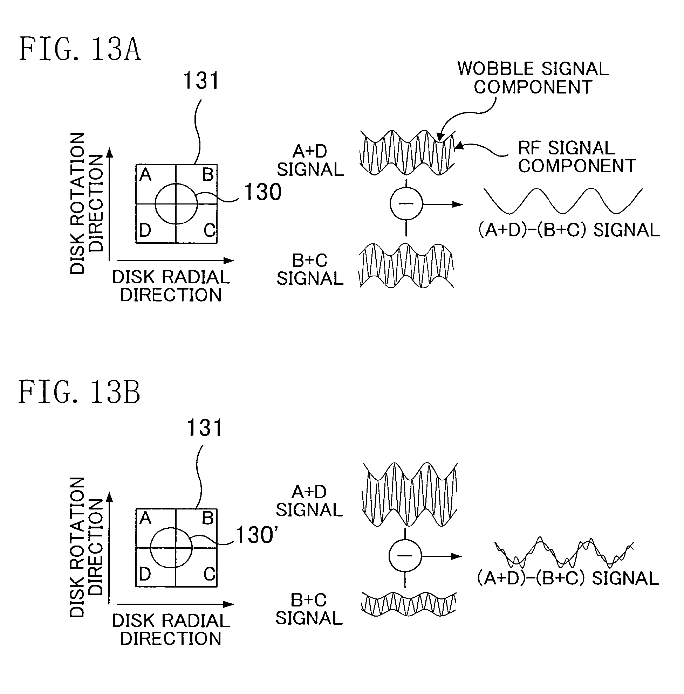

Next, the wobble signal extracting circuit 104 used in the above-described optical disk drive will be described in detail. FIG. 12 shows the architecture of the conventional wobble signal extracting circuit 104. The wobble signal extracting circuit 104 receives, from the optical pickup **100,** optical disk signals **S1** and **S2** each including an RF signal component corresponding to a data reproducing signal and a wobble signal component derived from the wobble formed on the optical disk 101, and extracts the wobble signal by subtracting the optical disk signal S2 from the optical disk signal S1 with a subtracter 120.

FIGS. 13A and 13B are diagrams for explaining the principle of the wobble signal extraction performed by the wobble signal extracting circuit 104. In the case where data recorded in an optical disk is reproduced, light 130 is reflected from the disk surface ideally uniformly on divided portions A, B, C and D of the photodetector 131 as shown in FIG. 13A. At this point, with respect to an A+D signal generated by the divided portions A and D arranged along the disk rotation direction, namely, the optical disk signal S1 shown in FIG. 12, and a B+C signal generated by the divided portions B and C similarly arranged along the disk rotation direction, namely, the optical disk signal S2 shown in FIG. 12, the RF signal components included in these signals are in the same phase and have the same amplitude but the wobble signal components included in these signals are in the reverse phases and have the same amplitude. Accordingly, when the optical disk signal **S2** is subtracted from the optical disk signal **S1** by the subtracter **120** of FIG. **12,** the RF signal components included in these signals are cancelled, and a (A+D) - (B+C) signal including the wobble signal component alone can be taken out as the output signal of the subtracter 120.

However, due to the limited accuracy in mounting the photodetector 131 or the like attained in the fabrication of the optical disk drive, light 130' is asymmetrically reflected on the photodetector **131** as shown in FIG. **13B.** In this case, differences in the amplitudes of the RF signal component and the wobble signal component is caused between the A+D signal and the B+C signal. If the subtracter 120 performs the subtracting processing without compensating the differences, the RF signal component partly remains in the output signal of the subtracter 120. Thus, it is difficult to accurately extract the wobble signal.

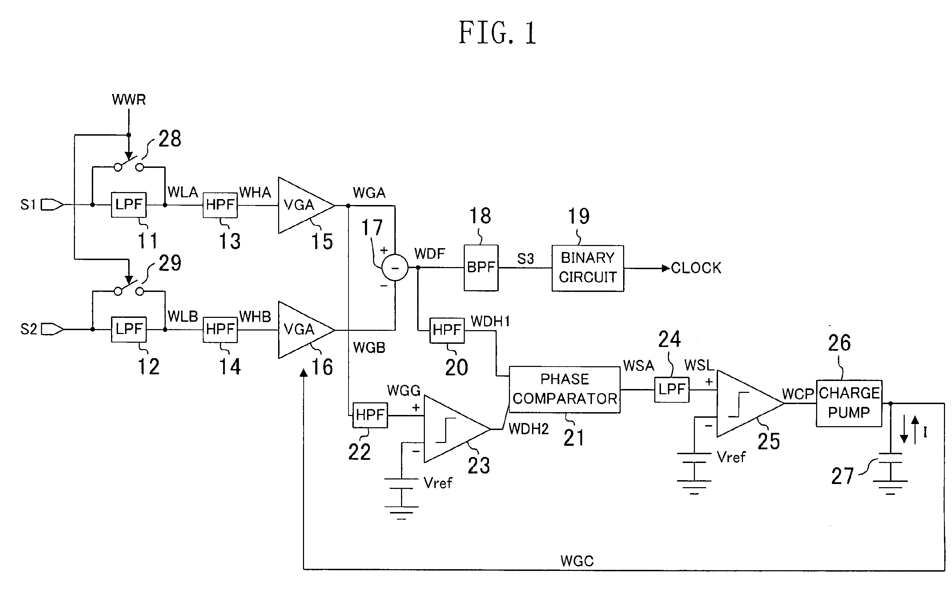

In the conventional technique, in order to solve this problem, the wobble signal extracting circuit 104 is provided with automatic gain controllers (hereinafter referred to as the AGCs) **121** and **122** for respectively giving gains to the optical disk signals **S1** and **S2** as shown in FIG. 12. Thus, the gains are automatically controlled before the subtracting processing of the subtracter 120 so that the amplitudes of the RF signal components respectively included in the optical signal S1 and S2 can be equal to each other. However, due to variation of the AGCs 121 and 122 or the like, the RF signal component still partly remains after the subtracting processing, and hence, the remaining RF signal component is further removed by a band pass filter (hereinafter referred to as the BPF) 123 for extracting the wobble signal S3. Thereafter, the extracted wobble signal S3 is binarized by a binarize circuit **124** (see, for example, Japanese Laid-Open Patent Publication No. 2001-266486 (pp. 4 - 5 and FIG. 1). The thus obtained binarized signal is used in the optical disk drive as a clock for the spindle servo and for acquirement of the address information of the optical disk.

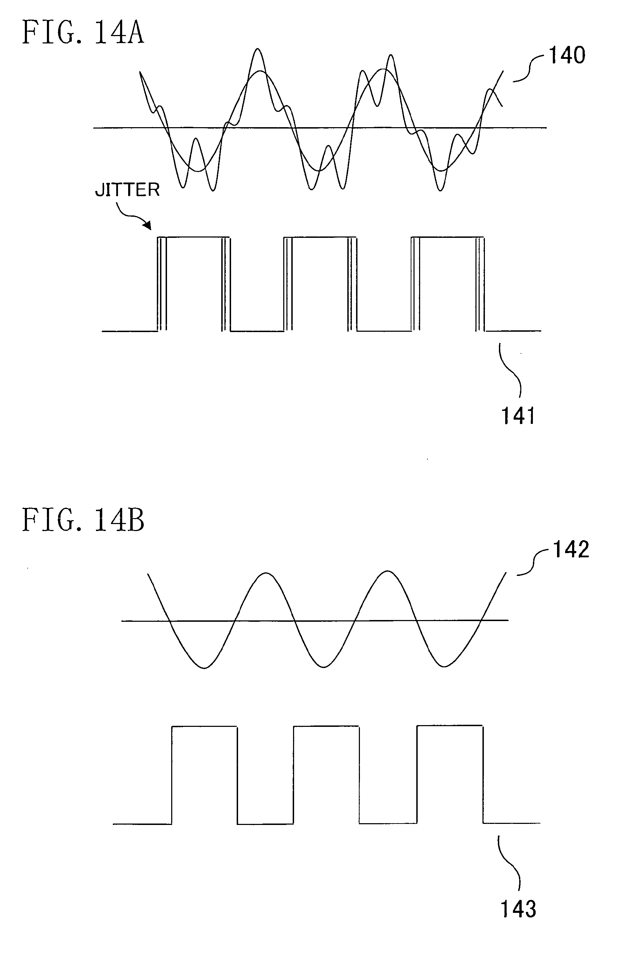

As described above, in the conventional wobble signal extracting circuit 104, the RF signal component unavoidably partly remains even after the subtracting processing of the subtracter 102 due to the variation of the AGCs 121 and 122 or the like. FIGS. 14A and 14B are graphs for showing the relationship between an extracted wobble signal and a binarized signal obtained by binarizing the wobble signal. As shown in FIG. 14A, in the case where the RF signal component partly remains in the extracted wobble signal 140, the binarize signal 141 obtained by binarizing the wobble signal includes much time fluctuation, namely, a large number of jitters. However, when a clock includes a large number of jitters, it is apprehended that the spindle servo and the address information acquirement cannot be accurately performed. Accordingly, in the conventional wobble signal extracting circuit 104, the highly accurate BPF 123 with a high frequency selecting property is indispensable for obtaining the wobble signal 142 in which the remaining RF signal component is attenuated as much as possible as shown in FIG. 14B. An ideal clock 143 including few jitters can be generated from the wobble signal 142 having been subjected to the filtering processing by such a highly accurate BPF 123.

However, when the high frequency selecting property is to be provided to the BPF 123, the circuit scale is increased, which is disadvantageous in the power consumption of the circuit and the cost. Also, in the case where a wobble signal and an RF signal have frequency bands comparatively close to each other as in a DVD+RW apparatus, even when the highly accurate BPF 123 is used, it is difficult to efficiently remove the RF signal component alone.

### SUMMARY OF THE INVENTION

In consideration of the aforementioned conventional problem, an object of the invention is, in a wobble signal extracting circuit for extracting a wobble signal from a signal read from an optical disk, removing an RF signal component included in an extracted wobble signal without providing a highly accurate BPF.

In order to achieve the object, the wobble signal extracting circuit of this invention includes a first gain amplifier for giving a gain to a first optical disk signal that is a signal read from an optical disk and includes an RF signal component based on recorded or reproduced data and a wobble signal component derived from a wobble formed on a surface of the optical disk; a second gain amplifier for giving a gain to a second optical disk signal that is a signal read from the optical disk and includes the RF signal component and a wobble signal component of a reverse phase to the first optical disk signal; and a subtracter for subtracting an output signal of the second gain amplifier from an output signal of the first gain amplifier, the wobble signal being extracted from an output signal of the subtracter, and the gain of at least one of the first and second gain amplifiers is controlled on the basis of evaluation of the output signal of the subtracter.

According to the invention, the output signal of the subtracter is evaluated, and the gain of at least one of the first and second gain amplifiers is feedback controlled on the basis of the evaluation result. As a result, a highly accurate wobble signal including no RF signal component can be extracted.

In the case where the RF signal component included in the output signal of the subtracter is evaluated, in the wobble signal extracting circuit, the gain of at least one of the first and second gain amplifiers is controlled on the basis of a difference between the RF signal component included in the output signal of the subtracter and the RF signal component included in the output signal of the first gain amplifier.

In this manner, the gain of at least one of the first and second gain amplifiers is feedback controlled on the basis of the difference between the RF signal component included in the output signal of the subtracter and the RF signal component included in the output signal of the first gain amplifier. This feedback system is operated so as to eliminate the difference. Therefore, when the difference between the RF signal component included in the first optical disk signal and the RF signal component included in the second optical disk signal is eliminated by the feedback system, the RF signal components included in these optical disk signals are cancelled through the subtracting processing performed by the subtracter. As a result, a highly accurate wobble signal including no RF signal component can be extracted.

Specifically, the wobble signal extracting circuit further includes a first filter for receiving the output signal of the subtracter and cutting a wobble signal component included in the received output signal; a second filter for receiving the output signal of the first gain amplifier and cutting a wobble signal component included in the received output signal; and a phase comparator for comparing a phase of an output signal of the first filter and a phase of an output signal of the second filter with each other and detecting amplitude of the output signal of the first filter, and the gain of at least one of the first and second gain amplifiers is controlled on the basis of a phase comparison result and an amplitude detection result obtained by the phase comparator.

Further specifically, the wobble signal extracting circuit further includes a binarize circuit for binarizing the output signal of the second filter, and the phase comparator compares the phase of the output signal of the first filter with the phase of the output signal of the second filter having been binarized by the binarize circuit.

Preferably, one of the first and second gain amplifiers is an automatic gain controller that makes amplitude of the corresponding first or second optical disk signal constant.

Preferably, the wobble signal extracting circuit further includes a wobble detecting circuit for detecting amplitude of the extracted wobble signal, and the gain of one of the first and second gain amplifiers is controlled on the basis of a phase difference between the output signal of the subtracter and the output signal of the first gain amplifier and amplitude of the RF signal component included in the output signal of the subtracter, and the gain of the other of the first and second gain amplifiers is controlled on the basis of an output signal of the wobble detecting circuit.

Preferably, the wobble signal extracting circuit further includes a first filter provided at a previous stage of the first gain amplifier for cutting a signal component that is included in the first optical disk signal and has a lower frequency than the wobble signal component; and a second filter provided at a previous stage of the second gain amplifier for cutting a signal component that is included in the second optical disk signal and has a lower frequency than the wobble signal component.

Preferably, the wobble signal extracting circuit further includes a first filter provided at a previous stage of the first gain amplifier for cutting, in writing data in the optical disk, a signal component that is included in the first optical disk signal and has a higher frequency than the RF signal component; and a second filter provided at a previous stage of the second gain amplifier for cutting, in writing data in the optical disk, a signal component that is included in the second optical disk signal and has a higher frequency than the RF signal component.

Preferably, the wobble signal extracting circuit further includes a drop-out detecting circuit for detecting attenuation of the RF signal components included in the first and second optical disk signals, and the drop-out detecting circuit fixes the gains of the first and second gain amplifiers for preventing variation of the gains when the attenuation of the RF signal components is detected.

Preferably, the wobble signal extracting circuit further includes a non-recorded region detecting circuit for detecting a non-recorded region in the optical disk, and the non-recorded region detecting circuit sets the gains of the first and second gain amplifiers to given values when the non-recorded region is detected.

Preferably, the wobble signal extracting circuit further includes a time constant switching circuit for switching a control time constant used in controlling the gains of the first and second gain amplifiers.

Specifically, the time constant switching circuit switches the control time constant in accordance with rotation characteristics of the optical disk.

Specifically, the time constant switching circuit sets the control time constant to a relatively small value for a given period of time after an access to the optical disk is switched from a data reproducing operation to a data writing operation or vice versa.

Specifically, the time constant switching circuit sets the control time constant to a relatively small value for a given period of time after a data reproducing position on the optical disk is switched from a non-recorded region to a recorded region or vice versa.

As described so far, according to the present invention, a highly accurate wobble signal including no RF signal component is extracted from first and second optical disk signals read from an optical disk without being affected by circuit variation of first and second gain amplifiers. In addition, since the RF signal components are removed without depending upon a band pass filter, the circuit scale is reduced, the power consumption is reduced and the cost is reduced. Moreover, the highly accurate wobble signal is easily extracted even in a DVD+RW apparatus in which the frequency bands of a wobble signal and an RF signal are comparatively close to each other.

### BRIEF DESCRIPTION OF THE DRAWINGS

FIG. 1 is a diagram for showing the architecture of a wobble signal extracting circuit according to Embodiment 1 of the invention;
FIGS. 2A and 2B are graphs for explaining the outline of phase comparison and amplitude detection performed by a phase comparator shown in FIG. 1;
FIGS. 3A and 3B are graphs for explaining the outline of feedback control performed by a variable gain amplifier shown in FIG. 1;
FIG. 4 is a diagram of various signal components included in an optical disk signal;
FIGS. **5A** and **5B** are graphs of optical disk signals obtained before and after cutting a recording pulse component;
FIG. 6 is a diagram for showing the architecture of a wobble signal extracting circuit according to Embodiment 2 of the invention;
FIG. 7 is a diagram for showing the architecture of a wobble signal extracting circuit according to Embodiment 3 of the invention;
FIG. 8 is a diagram for showing the architectures of a charge pump and its peripheral circuits used in the wobble signal extracting circuit of the invention;
FIGS. 9A and 9B are graphs for showing a difference in a transient response between the case where a control time constant is switched and the case where it is not switched;
FIG. 10 is a diagram for showing the architecture of a conventional optical disk drive;
FIG. 11 is an enlarged view of the surface of an optical disk placed in a servo controlled state;
FIG. 12 is a diagram for showing the architecture of a conventional wobble signal extracting circuit;
FIGS. 13A and 13B are diagrams for explaining the principle of wobble signal extraction performed by a wobble signal extracting circuit; and
FIGS. 14A and 14B are graphs for showing the relationship between an extracted wobble signal and a binarize signal obtained by binarizing the extracted wobble signal.

### DETAILED DESCRIPTION OF THE INVENTION

Preferred embodiments of the invention will now be described with reference to the accompanying drawings.

### EMBODIMENT 1

FIG. 1 shows the architecture of a wobble signal extracting circuit according to Embodiment 1 of the invention. The wobble signal extracting circuit of this embodiment receives the aforementioned optical disk signals S1 and S2. These optical disk signals S1 and S2 are subjected to filtering processing by recording pulse removing filters (hereinafter referred to as the LPFs) 11 and 12 respectively composed of two independent systems of low pass filters and decentration component removing filters (hereinafter referred to as the HPFs) 13 and 14 composed of high pass filters, and the resultant signals are respectively given gains by variable gain amplifiers (hereinafter referred to as the VGAs) 15 and 16. Thereafter, a subtracter **17** subtracts the resultant optical disk signal **S2** from the resultant optical disk signal **S1.**

As described above, owing to the mounting accuracy of a photodetector (not shown) or the like, the optical disk signals **S1** and **S2** may have different amplitudes. In this case, signals **WGA** and **WGB** respectively output by the VGA **15** and the VGA **16** also have different amplitudes, and hence, an RF signal component remains in a signal WDF output by the subtracter 17. Therefore, the RF signal component remaining in the signal WDF is removed by a BPF 18 so as to extract a wobble signal S3. Thereafter, the wobble signal S3 is binarized by a binarize circuit 19.

Next, the removal of the RF signal component remaining in the signal WDF performed by the wobble signal extracting circuit of this embodiment will be described. First, in order to taken out the RF signal component alone included in the signal WDF, a signal WDH1 obtained by removing the wobble signal component is generated by a wobble signal removing filter (HPF) 20 composed of a high pass filter, and the signal WDH1 is supplied to a phase comparator 21. Similarly, a signal WGG obtained by removing the wobble signal component from the signal WGA is generated by a wobble signal removing filter (HPF) 22 composed of a high pass filter, and the signal WGG is supplied to a comparator 23. The comparator 23 generates a signal WDH2 obtained by binarizing the signal WGG with reference to a reference voltage Vref and supplies the signal WDH2 to the phase comparator 21. The phase comparator 21 compares the phases of the signal **WDH1** and the signal **WDH2** with each other, detects the amplitude of the signal **WDH1,** and outputs a signal **WSA** as a result. A low pass filter (LPF) **24** rectifies the signal **WSA** so as to output a signal **WSL** of a DC voltage.

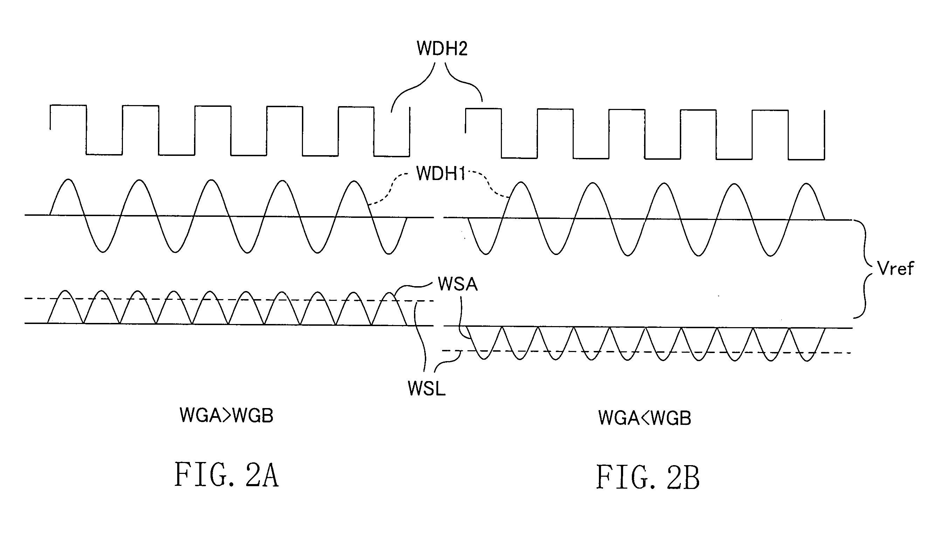

FIGS. 2A and 2B are graphs for explaining the outline of the phase comparison and the amplitude detection performed by the phase comparator 21. The phase relationship between the signal WDH1 and the signal WDH2 is determined depending upon the amplitudes of the signals WGA and WGB. Specifically, as shown in FIG. 2A, when the amplitude of the signal WGA is larger than that of the signal WGB, the signal **WDH1** and the signal **WDH2** have the same phase, and therefore, the phase comparator 21 outputs the signal WSA rectified positively with reference to the reference voltage Vref. As a result, the signal WSL is a positive voltage with reference to the reference voltage Vref. On the other hand, as shown in FIG. 2B, when the amplitude of the signal WGA is smaller than that of the signal WGB, the signal WDH1 and the signal WDH2 have reverse phases, and therefore, the phase comparator 21 outputs the signal WSA rectified negatively with reference to the reference voltage Vref. As a result, the signal WSL is a negative voltage with reference to the reference voltage Vref.

Referring to FIG. **1** again, a comparator **25** outputs a signal **WCP** obtained by binarizing the signal WSL with reference to the reference voltage Vref. A charge pump 26 pushes a current into or pulls a current out from a capacitative element 27 depending upon whether the signal WCP has a positive or negative value with reference to the reference voltage Vref. Thus, a voltage WGC generated in the capacitative element 27 is fed back to the VGA 16 for controlling the gain to be given by the VGA 16 to the optical disk signal S2.

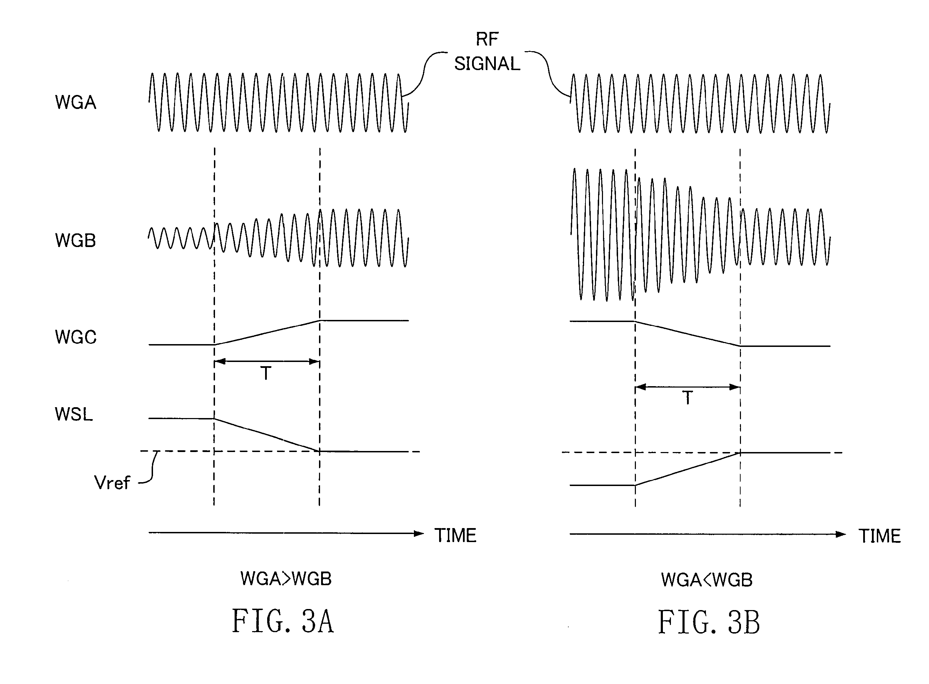

FIGS. 3A and 3B are graphs for explaining the outline of the feedback control of the VGA 16. As shown in FIG. 3A, when the amplitude of the signal WGA is larger than that of the signal WGB, the voltage of the signal WSL is higher than the reference voltage Vref. In this case, the charge pump 26 pushes a current into the capacitative element 27. As a result, the terminal voltage WGC of the capacitative element 27 is increased with time. Accordingly, the gain of the VGA 16 is increased, resulting in gradually increasing the amplitude of the signal WGB. The increase of the amplitude of the signal WGB is continued until the voltage of the signal WSL becomes equal to the reference voltage Vref. On the other hand, as shown in FIG. 3B, when the amplitude of the signal WGA is smaller than that of the signal WGB, the voltage of the signal WSL is lower than the reference voltage Vref. In this case, the charge pump 26 pulls a current out from the capacitative element 27. As a result, the terminal voltage WGC of the capacitative element 27 is reduced with time. Accordingly, the gain of the VGA 16 is reduced, resulting in gradually attenuating the amplitude of the signal WGB. The attenuation of the amplitude of the signal WGB is continued until the voltage of the signal WSL becomes equal to the reference voltage Vref.

Through the aforementioned feedback control, the voltage of the signal WSL is made to be equal to the reference voltage Vref. In other words, the amplitudes of the RF signal components respectively remaining in the signal WGA and the signal WGB are made equal. In this manner, the RF signal component remaining in the signal WDF is reduced to substantially zero.

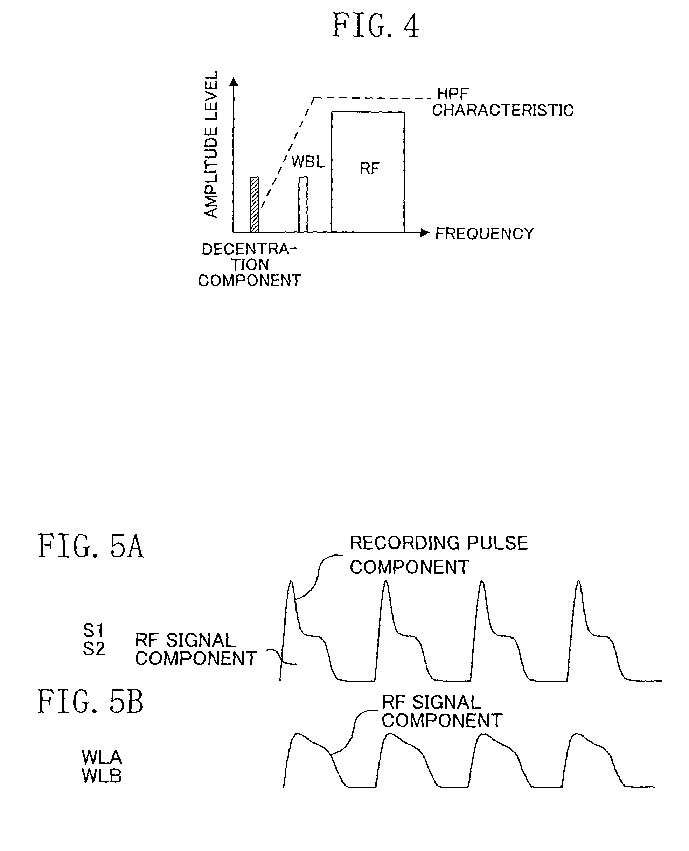

Each of the actual optical disk signals S1 and S2 may include a signal component other than the RF signal component and the wobble signal component. FIG. 4 is a diagram for showing various signal components included in each of the optical disk signals **S1** and **S2.** As shown in FIG. **4,** each of the optical disk signals **S1** and **S2** includes a decentration component that is a signal component based on decentration of the optical disk and has a frequency lower than a wobble signal component WBL. The decentration component is varied depending upon optical disk medium, and if it has comparatively large amplitude, it harmfully affects the accurate extraction of a wobble signal. Therefore, as shown in FIG. 1, before giving the gains by the VGAs 15 and 16, the decentration components are cut by the HPFs 13 and 14. Thus, the accuracy in extracting a wobble signal is improved.

Also, in a write-once optical disk drive, a wobble signal is taken out of a recording signal by sampling and holding a space portion disposed between recording signals for forming a pit 112 shown in FIG. 11 during a recording operation. However, in accordance with increase of the enhanced recording speed, the space portion cannot be accurately sampled and held owing to an insufficient slew rate of an amplifier (now shown) included in the optical pickup, and hence, it is apprehended that an accurate wobble signal cannot be taken out. Therefore, it is necessary to extract a wobble signal without sampling/holding also in a recording operation in the same manner as in a reproducing operation. However, a recording signal used in a write-once optical disk drive such as a CD-R apparatus includes not only the RF signal component but also a recording pulse on the basis of write strategy. Therefore, when the phases of the recording signals including the recording pulses are compared by the phase comparator 21, the recording pulse component with a higher frequency than the RF signal component causes an error. Thus, it is apprehended that the amplitude of the RF signal cannot be accurately detected. Accordingly, as shown in FIG. 1, the recording pulse components included in the optical disk signals **S1** and **S2** are respectively reduced to be cut by the LPFs **11** and **12.** FIGS. **5A** and **5B** are graphs of optical disk signals obtained before and after cutting the recording pulse components. The optical disk signals **S1** and **S2** shown in FIG. **5A** are subjected to the filtering processing respectively by the LPFs **11** and **12,** so as to obtain the signals WLA and WLB free from the recording pulse components as shown in FIG. **5B.**

The recording pulse components should be cut in a data recording operation alone and need not be cut in a reproducing operation in which the optical disk is generally rotated at a higher enhanced speed than in the recording operation because the cutting may harmfully affect the amplitude of the RF signal or the like. Therefore, switches 28 and 29 respectively provided in parallel to the input and output terminals of the LPFs 11 and 12 are controlled to be turned on/off in accordance with a recording/reproducing switching signal WWR, so that the LPFs 11 and 12 can be bypassed in a data reproducing operation and that the filtering processing of the LPFs 11 and 12 can be performed in a data recording operation. In this manner, the amplitude of the RF signal is accurately detected both in a data recording operation and a data reproducing operation.

As described so far, according to this embodiment, without using, as the BPF 18, a highly accurate filter with a particularly high frequency selecting property, a wobble signal including no RF signal component is accurately extracted. On the basis of such a wobble signal, a clock including no jitters is obtained.

Although the VGA 16 is feedback controlled in this embodiment, the VGA 15 may be feedback controlled instead. Alternatively, both the VGAs 15 and 16 may be feedback controlled.

Furthermore, the LPFs 11 and 12 and the switches 28 and 29 may be omitted. Similarly, the HPFs 13 and 14 may be omitted.

The VGA 16 is feedback controlled on the basis of the evaluation result of the RF signal component included in the output signal WDF of the subtracter 17 in the aforementioned embodiment, which does not limit the invention. Instead, a similar effect is attained by, for example, feedback controlling the VGA 16 so as to minimize jitters included in a signal obtained by binarizing the signal WDF.

### EMBODIMENT 2

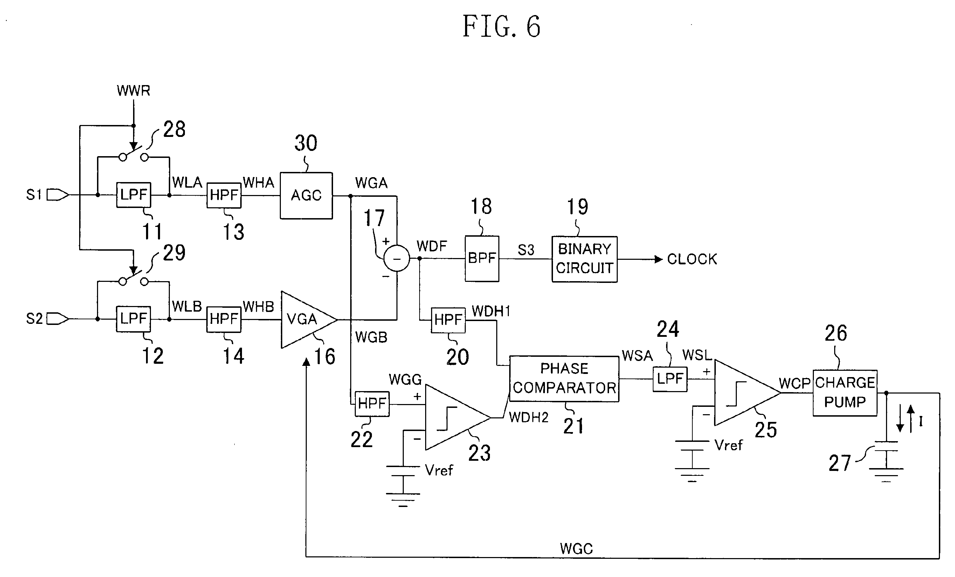

FIG. 6 shows the architecture of a wobble signal extracting circuit according to Embodiment 2 of the invention. The wobble signal extracting circuit of this embodiment is obtained by replacing the VGA 15 of the wobble signal extracting circuit of Embodiment 1 shown in FIG. **1** with an automatic gain controller (hereinafter referred to as AGC) **30.** The rest of the architecture is the same as that of Embodiment 1 and hence the description is omitted.

The amplitudes of the RF signal components included in the optical disk signals **S1** and **S2** used in recording/reproducing data are varied with time owing to various factors. Therefore, the AGC **30** makes the amplitude of the optical disk signal **S1** constant, so as to stabilize the amplitude of the output signal WDF of the subtracter 17. Thus, even when the amplitude of the RF signal is varied, the phase comparison and the amplitude detection performed by the phase comparator 21 is stabilized, resulting in accurately extracting the wobble signal S3.

### EMBODIMENT 3

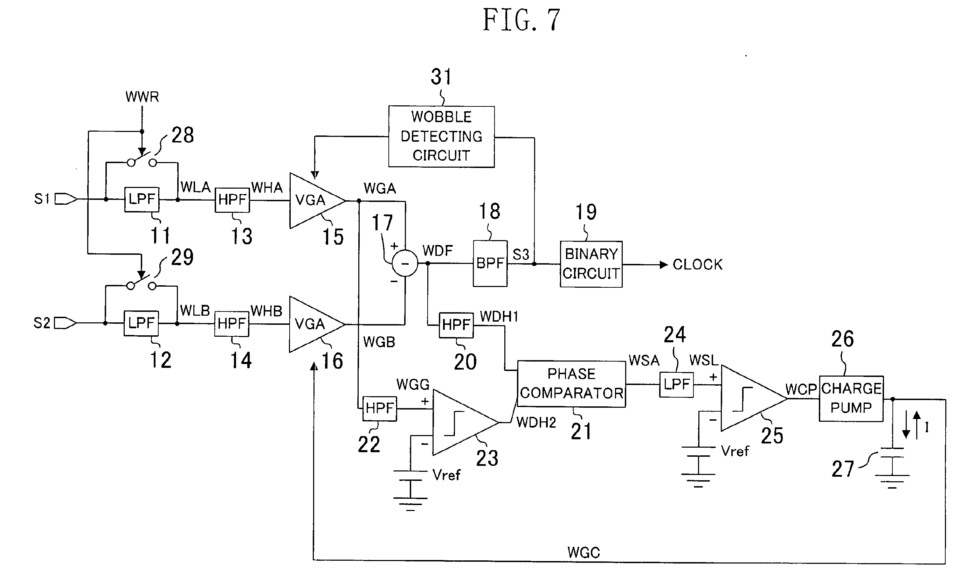

FIG. 7 shows the architecture of a wobble signal extracting circuit according to Embodiment 3 of the invention. The wobble signal extracting circuit of this embodiment is obtained by additionally providing a wobble detecting circuit 31 to the wobble signal extracting circuit of Embodiment 1 shown in FIG. 1. The rest of the architecture is the same as that of Embodiment 1 and hence the description is omitted.

In a wobble signal extracting circuit, a wobble signal is ideally extracted from one track of an optical disk, but actually, crosstalk is caused between signals derived from wobbles of adjacent tracks owing to the restriction of the optical system. Furthermore, wobbles formed in a CD-R or the like may be different in their shapes between adjacent tracks depending upon their positions. In the case where the shapes of wobbles of adjacent tracks are different depending upon their positions, the crosstalk caused in an extracted wobble signal is varied, resulting in modulating the amplitude of the wobble signal. Therefore, the wobble detecting circuit 31 is provided for detecting the amplitude of the extracted wobble signal S3, and the VGA 15 is feedback controlled in accordance with the detected amplitude. Thus, the amplitude of the wobble signal S3 is kept constant, and hence, a clock including few jitters is obtained.

### (Exemplified configurations of charge pump and its peripheral circuits)

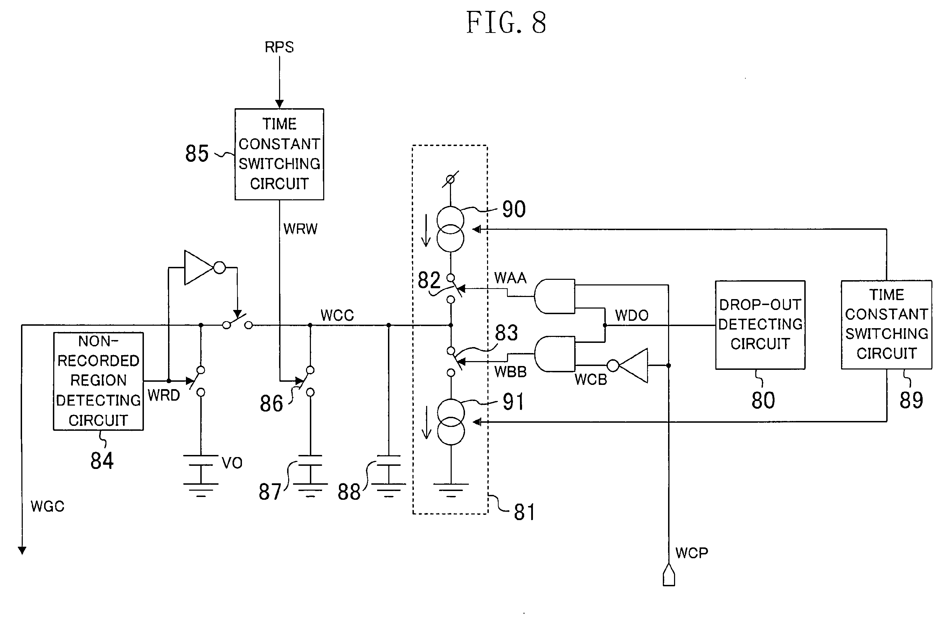

FIG. 8 shows exemplified configurations of the charge pump and its peripheral circuits used in the wobble signal extracting circuit of this invention. The charge pump and the peripheral circuits shown in FIG. 8 can be applied to any of the wobble signal extracting circuits of Embodiment 1 through 3, and herein, the application to the wobble signal extracting circuit of Embodiment 1 will be described for the sake of convenience.

In a reproducing operation for an optical disk, an RF signal may be attenuated, namely, so-called dropped out, for a given period of time due to a flaw caused on the surface of the optical disk or the like. In such a case, the RF signal component included in the signal WGA of FIG. 1 is attenuated and hence the signal WDH2 becomes unstable, and therefore, the phase comparison and the amplitude detection may not be accurately executed by the phase comparator 21. As a result, it is apprehended that an invalid transient response is caused in the circuit. In order to prevent such an invalid transient response, it is necessary to fix the gain of the VGA 16 during the time of the drop-out. Specifically, as shown in FIG. 8, a drop-out detecting circuit 80 for detecting the attenuation of the RF signal component included in the optical disk signal is provided. The drop-out detecting circuit 80 turns off switches 82 and 83 during the drop-out, so as to control the current flow to/from the charge pump 81. Thus, the variation of the voltage WGC is suppressed, and hence, the gain of the VGA 16 of FIG. 1 is fixed, so as to prevent an invalid transient response.

Furthermore, in the case where a region where no data is recorded (hereinafter referred to as the non-recorded region) is reproduced in a write-once or rewritable optical disk, no RF signal is included in an optical disk signal read from the optical disk. Similarly in this case, the signal WDH2 shown in FIG. 1 becomes unstable, and it is apprehended that an invalid transient response is caused in the circuit. In order to prevent such an invalid transient response, it is necessary to set the gain of the VGA 16 to a given value in reproducing a non-recorded region. Specifically, as shown in FIG. 8, a non-recorded region detecting circuit 84 for detecting a non-recorded region on the basis of the amplitude of an RF signal component included in the optical disk signal or the like is provided. The non-recorded region detecting circuit **84** sets the voltage **WGC** to **V0** in reproducing a non-recorded region, and sets the voltage WGC to be equal to an output voltage WCC of the charge pump 81 in reproducing a non-recorded region. Thus, the gain of the VGA 16 of FIG. 1 is set to a given value in reproducing a recorded region, so as to prevent an invalid transient response.

In the case where the voltage WGC is switched in accordance with whether a non-recorded region or a recorded region is reproduced in the aforementioned manner, a transient response is caused due to the change of the voltage **WGC.** Also, the input optical disk signal is different in the amplitude between a data recording operation and a data reproducing operation, and this amplitude difference also causes a transient response in switching the operation between data recording and data reproducing. During such a transient response time (corresponding to a gain control time **T** shown in FIGS. **3A** and **3B),** it is apprehended that a wobble signal cannot be accurately extracted, and this leads to an error in reading an address of the optical disk. Accordingly, the transient response time is preferably as short as possible. Specifically, in the wobble signal extracting circuit of FIG. 1, a time constant related to the gain control performed by the VGA 16 (hereinafter referred to as the control time constant) is preferably as small as possible. In particular, in an optical disk drive employing a lossless rink technique as a countermeasure against a buffer underrun error occurring in data recording or employing a packet write method for a rewritable optical disk, a wobble signal is required to be seamlessly extracted in switching, for example, between a data recording operation and a data reproducing operation.

On the other hand, in the wobble signal extracting circuit of FIG. 1, in order to attain a stable operation by preventing the influence of disturbance in a steady operation, it is preferred that the control time constant is set to a comparatively large value so as to set the gain control time T shown in FIGS. 3A and 3B to be comparatively long. Therefore, during the steady operation, the control time constant is set to be comparatively large, and in switching between a data recording operation and a data reproducing operation or between a non-recorded region and a recorded region, the control time constant is set to be small. Specifically, as shown in FIG. 8, a time constant switching circuit 85 is provided. The time constant switching circuit 85 turns off a switch 86 by outputting a pulse signal WRW for a given period of time after the switching occurs. The switch 86 is in an on state in general, and is turned off in response to the pulse signal WRW. Specifically, the control time constant employed in the steady operation is determined by capacitative elements 87 and 88 connected to each other in parallel, and when any of the switching between a data recording operation and a data reproducing operation or the switching between a non-recorded region and a recorded region occurs, the capacitative element 87 is disconnected for a given period of time after the occurrence of the switching, so as to make the control time constant small.

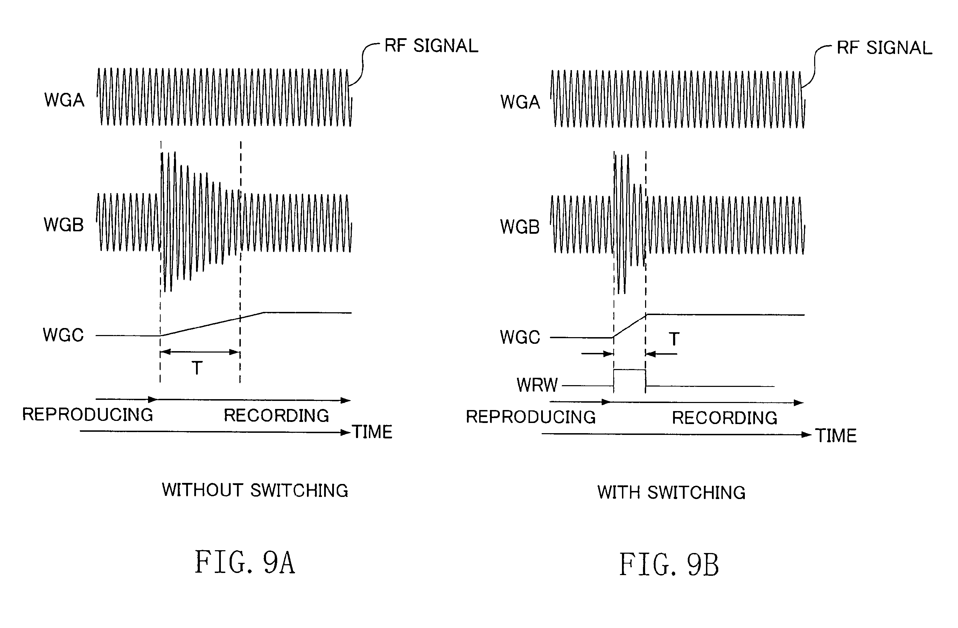

FIGS. 9A and 9B are graphs for showing a difference in a transient response between the case where the control time constant is switched and the case where it is not switched. FIG. 9A shows a transient response caused when the control time constant is not switched. FIG. 9B shows a transient response caused when the control time constant is switched. As is understood from comparison between FIGS. 9A and 9B, when the control time constant is switched, the signal WGB is rapidly converged to a steady value in switching a data reproducing operation to a data recording operation.

Furthermore, in general, data are reproduced and recorded in an optical disk drive by switching rotation characteristics such as the rotation speed of an optical disk, namely, the enhanced speed and the rotation method of the optical disk (such as CLV (constant linear velocity) and CAV (constant angular velocity)). However, since the frequencies of the RF signal and the wobble signal are changed depending upon the rotation characteristics of the optical disk, the optimum value of the gain control time T shown in FIGS. 3A and 3B is changed depending upon the enhanced speed. Therefore, the control time constant is preferably switched in accordance with the rotation characteristics of the optical disk. Specifically, as shown in FIG. 8, a time constant switching circuit 89 is provided. The time constant switching circuit 89 receives an instruction from, for example, a host computer (not shown) of the optical disk drive and controls the current values of current sources 90 and 91 of the charge pump 81 to be values in accordance with the rotation characteristics of the optical disk. Thus, the control time constant is switched in accordance with the rotation characteristics of the optical disk.

In the above description, the current value of the current flow to/from the charge pump 26 of FIG. 1 is switched in accordance with the rotation characteristics of the optical disk, which does not limit the invention. A similar effect is attained also by switching the capacitance value of the capacitative element 27.

Also, in FIG. 1, another VGA may be inserted before each of the VGAs 15 and 16 so as to switch the gains of the VGAs in accordance with the switching between a data recording operation and a data reproducing operation.

As described so far, the wobble signal extracting circuit of this invention is useful as a circuit, used in an optical disk reproducing apparatus or an optical disk recording/reproducing apparatus, for extracting a wobble signal from a signal read from an optical disk.

## Claims

1. A wobble signal extracting circuit comprising:
a first gain amplifier for giving a gain to a first optical disk signal that is a signal read from an optical disk and includes an RF signal component based on recorded or reproduced data and a wobble signal component derived from a wobble formed on a surface of the optical disk;
a second gain amplifier for giving a gain to a second optical disk signal that is a signal read from the optical disk and includes said RF signal component and a wobble signal component of a reverse phase to said first optical disk signal; and
a subtracter for subtracting an output signal of said second gain amplifier from an output signal of said first gain amplifier, said wobble signal being extracted from an output signal of said subtracter,
wherein the gain of at least one of said first and second gain amplifiers is controlled on the basis of evaluation of said output signal of said subtracter.

2. The wobble signal extracting circuit of Claim 1,
wherein the gain of at least one of said first and second gain amplifiers is controlled on the basis of a difference between said RF signal component included in said output signal of said subtracter and said RF signal component included in said output signal of said first gain amplifier.

3. The wobble signal extracting circuit of Claim 1, further comprising:
a first filter for receiving said output signal of said subtracter and cutting a wobble signal component included in said received output signal;
a second filter for receiving said output signal of said first gain amplifier and cutting a wobble signal component included in said received output signal; and
a phase comparator for comparing a phase of an output signal of said first filter and a phase of an output signal of said second filter with each other and detecting amplitude of said output signal of said first filter,
wherein the gain of at least one of said first and second gain amplifiers is controlled on the basis of a phase comparison result and an amplitude detection result obtained by said phase comparator.

4. The wobble signal extracting circuit of Claim 3, further comprising a binarize circuit for binarizing said output signal of said second filter,
wherein said phase comparator compares the phase of said output signal of said first filter with the phase of said output signal of said second filter having been binarized by said binarize circuit.

5. The wobble signal extracting circuit of Claim 1,
wherein one of said first and second gain amplifiers is an automatic gain controller that makes amplitude of said corresponding first or second optical disk signal constant.

6. The wobble signal extracting circuit of Claim 1, further comprising a wobble detecting circuit for detecting amplitude of said extracted wobble signal,
wherein the gain of one of said first and second gain amplifiers is controlled on the basis of a phase difference between said output signal of said subtracter and said output signal of said first gain amplifier and amplitude of said RF signal component included in said output signal of said subtracter, and the gain of the other of said first and second gain amplifiers is controlled on the basis of an output signal of said wobble detecting circuit.

7. The wobble signal extracting circuit of Claim 1, further comprising:
a first filter provided at a previous stage of said first gain amplifier for cutting a signal component that is included in said first optical disk signal and has a lower frequency than said wobble signal component; and
a second filter provided at a previous stage of said second gain amplifier for cutting a signal component that is included in said second optical disk signal and has a lower frequency than said wobble signal component.

8. The wobble signal extracting circuit of Claim 1, further comprising:
a first filter provided at a previous stage of said first gain amplifier for cutting, in writing data in the optical disk, a signal component that is included in said first optical disk signal and has a higher frequency than said RF signal component; and
a second filter provided at a previous stage of said second gain amplifier for cutting, in writing data in the optical disk, a signal component that is included in said second optical disk signal and has a higher frequency than said RF signal component.

9. The wobble signal extracting circuit of Claim 1, further comprising a drop-out detecting circuit for detecting attenuation of said RF signal components included in said first and second optical disk signals,
wherein said drop-out detecting circuit fixes the gains of said first and second gain amplifiers for preventing variation of the gains when the attenuation of said RF signal components is detected.

10. The wobble signal extracting circuit of Claim 1, further comprising a non-recorded region detecting circuit for detecting a non-recorded region in the optical disk,
wherein said non-recorded region detecting circuit sets the gains of said first and second gain amplifiers to given values when the non-recorded region is detected.

11. The wobble signal extracting circuit of Claim 1, further comprising a time constant switching circuit for switching a control time constant used in controlling the gains of said first and second gain amplifiers.

12. The wobble signal extracting circuit of Claim 11,
wherein said time constant switching circuit switches said control time constant in accordance with rotation characteristics of the optical disk.

13. The wobble signal extracting circuit of Claim 11,
wherein said time constant switching circuit sets said control time constant to a relatively small value for a given period of time after an access to the optical disk is switched from a data reproducing operation to a data writing operation or vice versa.

14. The wobble signal extracting circuit of Claim 11,
wherein said time constant switching circuit sets said control time constant to a relatively small value for a given period of time after a data reproducing position on the optical disk is switched from a non-recorded region to a recorded region or vice versa.

15. An optical disk drive comprising the wobble signal extracting circuit of Claim 1.
